# EUROPEAN PATENT APPLICATION

(11) **EP 4 736 647 A1**
(43) Date of publication of application: **06.05.2026**
(21) Application number: 24832085.5
(22) Date of filing: 28.06.2024
(51) Int. Cl.: A01N 45/00, A01N 25/30, A01N 65/42, A01P 7/04

(54) **COMPOSITION, PEST CONTROL PREPARATION, AND PEST CONTROL METHOD**

(30) Priority: 30.06.2023 JP 2023108106
(71) Applicant: Sumitomo Chemical Company, Limited, Tokyo 103-6020 (JP)
(72) Inventor: SONOBE, Fuhito, Takarazuka-shi, Hyogo 665-8555 (JP)
(74) Representative: Vossius & Partner Patentanwälte Rechtsanwälte mbB
(86) International application number: PCT/JP2024/023477
(87) International publication number: WO 2025/005227

(57) **Abstract**

The present invention aims to provide a composition that is useful in the production of a pest control formulation, and that contains Veratridine and Cevadine. The present invention specifically provides a composition that contains Veratridine, Cevadine, a polyoxyethylene sorbitan fatty acid ester-based surfactant, a hydrophobic solvent, and a glycol-based solvent; a composition may further contain one or more compounds selected from the group consisting of a sorbitan fatty acid ester and lecithin, and may further contain a propellant gas; a pest control formulation containing the composition; and a pest control method using the pest control formulation.

## Description

### [Technical Field]

This application claims priority to and the benefit of Japanese Patent Application No. 2023-108106 filed on June 30, 2023 according to the Paris Convention, the entire contents of which are incorporated herein by reference.

The present invention relates to a composition containing insecticidal active ingredients contained in Sabadilla seed extracts, specifically Veratridine and Cevadine, a polyoxyethylene sorbitan fatty acid ester-based surfactant, a hydrophobic solvent, and a glycol-based solvent; a pest arthropod control composition containing the composition; and a pest arthropod control method using the composition. The present invention also more specifically relates to a composition which, in addition to Veratridine, Cevadine, a polyoxyethylene sorbitan fatty acid ester-based surfactant, a hydrophobic solvent, and a glycol-based solvent, may further contain a sorbitan fatty acid ester and/or lecithin, and may further contain a propellant gas.

### [Background Art]

Plants of Schoenocaulon spp. are generally referred to as Sabadilla, and a naturally occurring insecticide has been obtained from various tissues of Sabadilla. In particular, the species with the longest history among them is Schoenocaulon officinale.

Veratridine and Cevadine are known as alkaloid active ingredients contained in Sabadilla seeds, and these alkaloids are known to have insecticidal activity.

As an extract of Sabadilla seeds obtained by extracting these alkaloid active ingredients from the Sabadilla seeds, a glycol-based solvent (for example, propylene glycol) extract of Sabadilla seeds by McLaughlin Gormley King Company (MGK) has been reported (see Patent Literatures 1 and 2).

As for insecticidal aerosol formulations that have been used so far, oil-based aerosol formulations are known in which a pyrethroid-based ingredient (for example, synthetic pyrethroids) is used as an active ingredient, and the active ingredient is dissolved in a hydrophobic solvent such as paraffin.

### [Citation List]

### [Patent Literature]

[Patent Literature 1] WO 2017/070451 A1
[Patent Literature 2] WO 2019/133423 A1

### [Summary of the Invention]

### [Problems to be Solved by the Invention]

To use these alkaloid components or the alkaloid components contained in Sabadilla seed extracts as active ingredients in formulations, especially in aerosols, it is necessary to uniformly mix these alkaloid components with a hydrophobic solvent.

In particular, there is a demand for novel insecticides that are different from conventional insecticides using pyrethroid-based ingredients (for example, synthetic pyrethroids) as active ingredients.

### [Means for Solving the Problems]

The present inventor conducted extensive research to solve the above problem and found that, by combining a polyoxyethylene sorbitan fatty acid ester-based surfactant and a glycol-based solvent, Veratridine and Cevadine can be uniformly mixed in a hydrophobic solvent, thus completing the present invention.

That is, the present invention relates to a composition characterized by containing Veratridine, Cevadine, a polyoxyethylene sorbitan fatty acid ester-based surfactant, a hydrophobic solvent, and a glycol-based solvent; the above composition, which may further contain a sorbitan fatty acid ester and/or lecithin, and may further contain a propellant gas; a pest arthropod control composition characterized by containing the composition; and a pest arthropod control method characterized by using the composition.

Accordingly, embodiments of the present invention includes the following.
[1] A composition containing Veratridine, Cevadine, a polyoxyethylene sorbitan fatty acid ester-based surfactant, a hydrophobic solvent, and a glycol-based solvent.
[2] The composition according to [1], wherein the ratio of (the total parts by weight of Veratridine and Cevadine) to (the total parts by weight of the polyoxyethylene sorbitan fatty acid ester-based surfactant) is 1:1 to 1:1000.
[3] The composition according to [1] or [2], wherein, when the total parts by weight of the hydrophobic solvent is taken as 1,
   the total parts by weight of Veratridine and Cevadine is 0.001 to 1,
   the total parts by weight of the polyoxyethylene sorbitan fatty acid ester-based surfactant is 0.1 to 10, and
   the total parts by weight of the glycol-based solvent is 0.01 to 1.
[4] The composition according to any one of [1] to [3], further containing one or more compounds selected from the group consisting of a sorbitan fatty acid ester and lecithin.
[5] The composition according to any one of [1] to [4], further containing a propellant gas.
[6] The composition according to any one of [1] to [5], the hydrophobic solvent is paraffin.
[7] The composition according to any one of [1] to [6], wherein the polyoxyethylene sorbitan fatty acid ester-based surfactant is one or more compounds selected from the group consisting of polyoxyethylene sorbitan monolaurate, polyoxyethylene sorbitan monopalmitate, polyoxyethylene sorbitan monostearate, polyoxyethylene sorbitan monooleate, and polyoxyethylene sorbitan trioleate.
[8] The composition according to any one of [1] to [7], wherein the polyoxyethylene sorbitan fatty acid ester-based surfactant is one or more compounds selected from the group consisting of polyoxyethylene sorbitan trioleate and polyoxyethylene sorbitan monostearate.
[9] The composition according to any one of [1] to [8], wherein the glycol-based solvent is one or more compounds of a glycol-based solvent having 3 to 6 carbon atoms, selected from the group consisting of propylene glycol, dipropylene glycol, 1,3-butanediol, and 3-methyl-1,3-butanediol.
[10] The composition according to [9], wherein the glycol-based solvent having 3 to 6 carbon atoms is propylene glycol.
[11] The composition according to any one of [1] to [10], wherein the sorbitan fatty acid ester is one or more compounds selected from the group consisting of sorbitan monolaurate, sorbitan monopalmitate, sorbitan monostearate, sorbitan monooleate, and sorbitan trioleate.
[12] The composition according to any one of [1] to [11], wherein Veratridine and Cevadine are contained in a Sabadilla seed extract.
[13] The composition according to [12], wherein the Sabadilla seed extract is a propylene glycol solution.
[14] The composition according to [13], wherein the total weight of Veratridine and Cevadine in the propylene glycol solution which is the Sabadilla seed extract is 0.1% to 50% by weight.
[15] A pest control formulation containing the composition according to any one of [1] to [14].
[16] The pest control formulation according to [15], wherein the pest is a pest arthropod.
[17] The pest control formulation according to [16], wherein the pest arthropod is Diptera or Blattodea.
[18] A pest control method including a step of applying the pest control formulation according to any one of [15] to [17] to a pest, its habitat, or an area where it is expected to appear.
[19] The composition according to any one of [1] to [14], further containing one or more components selected from Group (a):
   Group (a) consists of acetylcholinesterase inhibitors, GABA-gated chloride ion channel blockers, sodium channel modulators, nicotinic acetylcholine receptor competitive modulators, nicotinic acetylcholine receptor allosteric modulators, glutamate-gated chloride ion channel allosteric modulators, juvenile hormone mimics, multisite inhibitors, chordotonal organ TRPV channel modulators, mites growth inhibitors, microbial disruptors of insect midgut membranes, mitochondrial ATP synthase inhibitors, uncouplers of oxidative phosphorylation, nicotinic acetylcholine receptor channel blockers, chitin synthesis inhibitors, molting inhibitors, ecdysone receptor agonists, octopamine receptor agonists, inhibitors of mitochondrial electron transport chain complexes I, II, III, and IV, voltage-dependent sodium channel blockers, acetyl-CoA carboxylase inhibitors, ryanodine receptor modulators, chordotonal organ modulators, microbial insecticides, acaricidal active ingredients, and nematicidal active ingredients.

### [Effects of the Invention]

The present invention can provide a composition, suitable for formulations, particularly aerosol formulations, in which Veratridine and Cevadine are uniformly mixed in a hydrophobic solvent. The present invention can also provide a pest arthropod control composition characterized by containing the composition; and a pest arthropod control method characterized by using the composition.

### [Mode for Carrying Out the Invention]

In the present invention, Veratridine and Cevadine (hereinafter sometimes referred to as "Present alkaloid components") are alkaloid compounds represented by the following structural formulae.

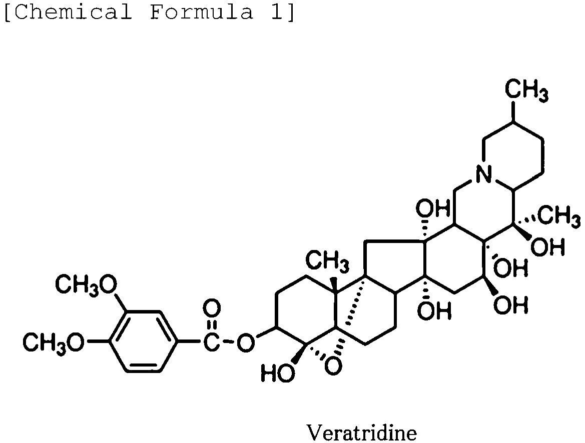

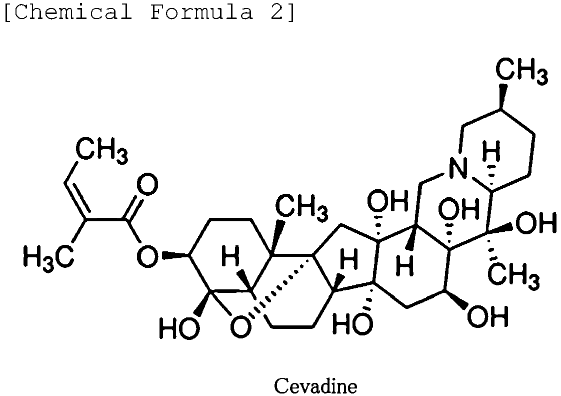

These Veratridine and Cevadine are contained in Sabadilla seeds and can be extracted into an organic solvent by the methods described in, for example, Patent Literatures 1 and 2.

Plants of Schoenocaulon spp. are generally referred to as Sabadilla. Sabadilla seed extracts and/or extraction residues of Sabadilla seeds, etc., can be obtained from any species belonging to the Schoenocaulon. Schoenocaulon spp. includes the following species: Schoenocaulon calcicola, Schoenocaulon caricifolium, Schoenocaulon comatum, Schoenocaulon conzattii, Schoenocaulon dubium (also known as Schoenocaulon gracile), Schoenocaulon framei, Schoenocaulon ghiesbreghtii (also known as Schoenocaulon drummondii, Schoenocaulon yucatanense), Schoenocaulon ignigenum, Schoenocaulon intermedium, Schoenocaulon jaliscense, Schoenocaulon macrocarpum (also known as Schoenocaulon lauricola), Schoenocaulon madidorum, Schoenocaulon megarrhizum, Schoenocaulon mortonii, Schoenocaulon oaxacense, Schoenocaulon obtusum, Schoenocaulon officinale, Schoenocaulon pellucidum, Schoenocaulon plumosum, Schoenocaulon pringlei, Schoenocaulon rzedowskii, Schoenocaulon tenorioi, Schoenocaulon tenue, Schoenocaulon tenuifolium, Schoenocaulon texanum, and Schoenocaulon tigrense.

In the present invention, commercially available Present alkaloid components or Sabadilla seed extracts containing Present alkaloid components may be used, synthesized Present alkaloid components may be used, or Present alkaloid components extracted from Sabadilla seeds may be used. When using Present alkaloid components extracted from Sabadilla seeds, they may be used together with the solvent used for extraction. Hereinafter, the Sabadilla seed extract containing Present alkaloid components together with the solvent used for extraction, is sometimes referred to as "Present Sabadilla seed extract".

A Sabadilla seed extract can be obtained by known methods (for example, the methods described in WO 2017/070451 A1 and WO 2019/133423 A1), but is not limited to these methods. Examples of the solvents for extraction include generally known organic solvents (for example, alkanes, halogenated alkanes, aromatic alkanes, alcohols, and esters), but are not limited thereto. In the present invention, Sabadilla seed extracts obtained using glycol-based solvents may be used.

Here, examples of the glycol-based solvents that can be used include glycol-based solvents having 3 to 6 carbon atoms, specifically selected from the group consisting of propylene glycol, dipropylene glycol, 1,3-butanediol, and 3-methyl-1,3-butanediol. Particularly preferred is propylene glycol. It is preferable that Present Sabadilla seed extract is a propylene glycol solution.

When using Present Sabadilla seed extract, the total weight of Veratridine and Cevadine in the Present Sabadilla seed extract may be 0.1% by weight or more, 1% by weight or more, 5% by weight or more, 50% by weight or less, 30% by weight or less, 20% by weight or less, or 15% by weight or less. The total weight of Veratridine and Cevadine in the Present Sabadilla seed extract is preferably 0.1% to 50% by weight, preferably 1% to 30% by weight, preferably 5% to 20% by weight, and preferably 5% to 15% by weight. The Present Sabadilla seed extract may also contain impurities derived from Sabadilla.

The present invention is a composition containing Veratridine, Cevadine, a polyoxyethylene sorbitan fatty acid ester-based surfactant, a hydrophobic solvent, and a glycol-based solvent (hereinafter, sometimes referred to as "Present composition"). Hereinafter, a polyoxyethylene sorbitan fatty acid ester-based surfactant is sometimes referred to as "Present polyoxyethylene sorbitan fatty acid ester-based surfactant".

In the present invention, the Present polyoxyethylene sorbitan fatty acid ester-based surfactant is a fatty acid ester compound of polyoxyethylene sorbitan. Here, the fatty acid ester portion may be a mono-, di-, or tri-ester, with the mono-ester being preferred. The fatty acid ester portion includes chain or branched alkyl groups having 1 to 20 carbon atoms, or cyclic alkyl groups (having 3 to 10 carbon atoms). Preferably, it is a chain or branched alkyl group having 1 to 20 carbon atoms; more preferably, 10 to 20 carbon atoms; even more preferably, 12 to 20 carbon atoms; and particularly preferably, a chain or branched alkyl group having 12 to 18 carbon atoms.

Specific examples of the Present polyoxyethylene sorbitan fatty acid ester-based surfactant include, but are not limited to, the following. Specific examples include polyoxyethylene sorbitan monolaurate, polyoxyethylene sorbitan monopalmitate, polyoxyethylene sorbitan monostearate, polyoxyethylene sorbitan monooleate, and polyoxyethylene sorbitan trioleate, as well as two or more of these compounds. The Present polyoxyethylene sorbitan fatty acid ester-based surfactant is preferably one or more compounds selected from the group consisting of polyoxyethylene sorbitan trioleate and polyoxyethylene sorbitan monostearate. The Present polyoxyethylene sorbitan fatty acid ester-based surfactant may be produced using generally known manufacturing methods, or may be obtained from commercially available products. For example, it can be purchased as Tween 20 (trademark) (containing polyoxyethylene sorbitan monolaurate), Tween 40 (trademark) (containing polyoxyethylene sorbitan monopalmitate), Tween 60 (trademark) (containing polyoxyethylene sorbitan monostearate), Tween 80 (trademark) (containing polyoxyethylene sorbitan monooleate), and Tween 85 (trademark) (containing polyoxyethylene sorbitan trioleate).

In the present invention, examples of the hydrophobic solvents include one or more solvents selected from the group consisting of paraffin, essential oils, fats and oils, ester oils, and carboxylic acid ester-based solvents. Paraffin is preferred. Specifically, paraffin used in the production of aerosol formulations (for example, aerosol formulations for insecticides) can be cited, such as normal paraffin and isoparaffin. The paraffin used in the present invention may be produced by generally known manufacturing methods or may be obtained from commercially available products. For example, it can be purchased as Neothiozole manufactured by Sankoh Chemical Industry Co., Ltd.; Normal Paraffin N-12, Normal Paraffin N-13, Normal Paraffin N-14, and Normal Paraffin MA manufactured by JXTG Energy Co., Ltd.; ISOPAR (trademark) E, ISOPAR (trademark) G, ISOPAR (trademark) H, ISOPAR (trademark) L, ISOPAR (trademark) M, EXXOL (trademark) DSP80/100, EXXOL (trademark) DSP100/140, EXXSOL (trademark) DSP145/160, EXXOL (trademark) D40, EXXOL (trademark) D80, EXXOL (trademark) D110, EXXOL (trademark) D130 manufactured by Exxon Mobil Corporation; and IP Solvent 1620, IP Solvent 2028, and IP Clean LX manufactured by Idemitsu Kosan Co., Ltd.

Examples of the essential oils include linalool, lavender oil, orange oil, eucalyptus oil, citral, citronellol, and spearmint oil.

Examples of the fats and oils include vegetable fats and oils and animal fats and oils. Examples of the vegetable fats and oils include olive seed oil, coconut oil, safflower oil, linseed oil, avocado oil, almond oil, sesame oil, wheat germ oil, shea butter (shea), camellia oil, peach kernel oil, castor oil, grape seed oil, macadamia nut oil, and rosehip oil. Examples of the animal fats and oils include horse oil, turtle oil, mink oil, and egg yolk oil.

Examples of the ester oils include isopropyl myristate, isopropyl lanolate, hexyl laurate, myristyl myristate, cetyl myristate, octyldodecyl myristate, decyl oleate, octyldodecyl oleate, neodecanoic acid octyldodecyl ester (dimethyloctanoic acid hexyl decyl ester), cetyl ethylhexanoate (iso-octanoic acid cetyl ester), cetyl palmitate, and triethylhexanoin.

Specific examples of the glycol-based solvent in the present invention include propylene glycol, dipropylene glycol, 1,3-butanediol, 3-methyl-1,3-butanediol, or two or more of these compounds. Propylene glycol is preferred.

The glycol-based solvent may be the solvent used for extraction of Sabadilla seeds. When producing the Present composition using the Present Sabadilla seed extract, the same glycol-based solvent as that used for extraction may be used, or a different glycol-based solvent may be used.

The composition of the present invention may further contain a sorbitan fatty acid ester and/or lecithin, in addition to Veratridine, Cevadine, a polyoxyethylene sorbitan fatty acid ester-based surfactant, a hydrophobic solvent, and a glycol-based solvent. The sorbitan fatty acid ester and lecithin may each be contained alone, but preferably, they are contained in combination in the Present composition.

A sorbitan fatty acid ester refers to a compound in which sorbitan is esterified with a fatty acid. Here, the fatty acid ester portion may be a mono-, di-, or tri-ester, with the mono-ester being preferred. The fatty acid ester portion includes chain or branched alkyl groups having 1 to 20 carbon atoms, or cyclic alkyl groups (having 3 to 10 carbon atoms). Preferably, it is a chain or branched alkyl group having 1 to 20 carbon atoms; more preferably, 10 to 20 carbon atoms; even more preferably, 12 to 20 carbon atoms; and particularly preferably, a chain or branched alkyl group having 12 to 18 carbon atoms.

Specific examples of the sorbitan fatty acid esters include, but are not limited to, the following. Specific examples include sorbitan monolaurate, sorbitan monopalmitate, sorbitan monostearate, sorbitan monooleate, and sorbitan trioleate, as well as two or more of these compounds. These sorbitan fatty acid esters may be produced using generally known manufacturing methods, or may be obtained from commercially available products. For example, they can be purchased as Span 20 (trademark) (containing sorbitan monolaurate), Span 40 (trademark) (containing sorbitan monopalmitate), Span 60 (trademark) (containing sorbitan monostearate), Span 80 (trademark) (containing sorbitan monooleate), and Span 85 (trademark) (containing sorbitan trioleate).

The lecithin used in the present invention refers to a phospholipid. Specifically, examples include phosphatidylcholine (PC), phosphatidylethanolamine (PE), phosphatidylinositol (PI), phosphatidic acid (PA), and mixtures of two or more thereof. Preferably, phosphatidylcholine (PC) is used.

The composition of the present invention may contain a propellant gas. The term "propellant gas" refers to a gas used in aerosol formulations for insecticidal formulations, specific examples include liquefied petroleum gas (LP gas) and dimethyl ether, as well as highly volatile gases (such as propane and butane). The propellant gas may be obtained as a commercially available product; for example, LPG 0.47 can be purchased.

The Present composition can be prepared by weighing predetermined amounts of the Present alkaloid components or the Present Sabadilla seed extract and various materials (for example, a polyoxyethylene sorbitan fatty acid ester-based surfactant, a hydrophobic solvent, a glycol-based solvent, a sorbitan fatty acid ester, and lecithin), and mixing them together. When using the Present Sabadilla seed extract, the Present Sabadilla seed extract and the various materials are mixed so that the weight percent of the total amount of Veratridine and Cevadine contained in the Present Sabadilla seed extract reaches a desired concentration in the prepared composition, and the resulting mixture is stirred at a constant temperature (for example, room temperature (25°C)) to obtain the composition. The resulting composition is in liquid form.

An aerosol composition can be produced by adding a propellant gas to the liquid composition of the present invention obtained as described above. Hereinafter, the composition containing a propellant gas is sometimes referred to as "the Present aerosol composition." Specifically, various materials other than the propellant gas (for example, LPG) are weighed and mixed, and the resulting mixture is placed into an aerosol container. After attaching an aerosol valve to the container, the propellant gas (for example, LPG gas) is filled into the container to obtain the aerosol composition.

In this description, the term "Present composition" includes "Present aerosol composition" unless otherwise specified.

In the Present composition, the ratio of (the total parts by weight of Veratridine and Cevadine) to (the total parts by weight of the polyoxyethylene sorbitan fatty acid ester-based surfactant) is preferably in the range of 1:1 to 1:1000, preferably in the range of 1:10 to 1:1000, preferably in the range of 1:20 to 1:1000, preferably in the range of 1:30 to 1:1000, preferably in the range of 1:40 to 1:1000, and preferably in the range of 1:50 to 1:1000. The ratio of (the total parts by weight of Veratridine and Cevadine) to (the total parts by weight of the polyoxyethylene sorbitan fatty acid ester-based surfactant) is more preferably in the range of 1:100 to 1:990.

Furthermore, the total weight of Veratridine and Cevadine is not particularly limited as long as it is a concentration at which they can be dissolved in the prepared composition, for example, may be 5% by weight or less, 3% by weight or less, 2% by weight or less, 0.01% by weight or more, 0.03% by weight or more, 0.05% by weight or more, 0.1% by weight or more, 0.3% by weight or more, or 0.5% by weight or more, relative to the total weight of the composition. More specifically, examples include 1.52% by weight, 1.04% by weight, 0.51% by weight, and 0.14% by weight. Preferably, it is 0.05% by weight or more and 5% by weight or less; more preferably, it is 0.14% by weight or more and 1.52% by weight or less; and still more preferably, it is 0.51% by weight or more and 1.52% by weight or less.

In the Present composition, when the total parts by weight of the hydrophobic solvent is set to 1,
the total parts by weight of Veratridine and Cevadine is preferably 0.001 to 1,
the total parts by weight of the polyoxyethylene sorbitan fatty acid ester-based surfactant is preferably 0.1 to 10,
and the total parts by weight of the glycol-based solvent is preferably 0.01 to 1.

The ratio of (the total parts by weight of the hydrophobic solvent) to (the total parts by weight of Veratridine and Cevadine) is preferably 1:0.001 to 1:1, preferably 1:0.003 to 1:0.5, preferably 1:0.005 to 1:0.05, and preferably 1:0.005 to 1:0.02.

The ratio of (the total parts by weight of the hydrophobic solvent) to (the total parts by weight of the polyoxyethylene sorbitan fatty acid ester-based surfactant) is preferably 1:0.1 to 1:10, preferably 1:0.1 to 1:5, preferably 1:0.2 to 1:1, and preferably 1:0.2 to 1:0.5.

The ratio of (the total parts by weight of the hydrophobic solvent) to (the total parts by weight of the glycol-based solvent) is preferably 1:0.01 to 1:1, preferably 1:0.01 to 1:0.5, preferably 1:0.02 to 1:0.3, and preferably 1:0.02 to 1:0.1.

In the Present composition, the ratio of (the total parts by weight of the polyoxyethylene sorbitan fatty acid ester-based surfactant) to (the total parts by weight of the sorbitan fatty acid esters and lecithin) is preferably in the range of 1:1000 to 1000:1, preferably in the range of 1:100 to 100:1, preferably in the range of 1:50 to 50:1, preferably in the range of 1:30 to 30:1, preferably in the range of 1:20 to 20:1, and preferably in the range of 1:10 to 10:1. The ratio of (the total parts by weight of the polyoxyethylene sorbitan fatty acid ester-based surfactant) to (the total parts by weight of the sorbitan fatty acid esters and lecithin) is particularly preferably in the range of 1:10 to 10:1.

A composition containing a combination of a polyoxyethylene sorbitan fatty acid ester-based surfactant and a sorbitan fatty acid esters and/or lecithin preferably has a Hydrophilic-Lipophilic Balance (HLB) value in the range of 9.5 to 12.0, but is not limited thereto. More preferably, in the range of 9.5 to 11.5, and even more preferably, in the range of 10.0 to 11.5.

In the Present aerosol composition, the ratio of (the total parts by weight of the Present composition) to (the total parts by weight of the propellant gas) is preferably in the range of 1:10 to 10:1, preferably in the range of 1:5 to 5:1, preferably in the range of 1:3 to 3:1, and preferably in the range of 1:2 to 2:1. The ratio of (the total parts by weight of the Present composition) to (the total parts by weight of the propellant gas) is more preferably in the range of 2:1 to 1:1, and even more preferably, for example, 3:2.

The composition of the present invention containing Veratridine, Cevadine, a polyoxyethylene sorbitan fatty acid ester surfactant, a hydrophobic solvent, and a glycol-based solvent, and may further contain one or more compounds selected from the group consisting of a sorbitan fatty acid ester and lecithin, can be used in a pest control formulation (hereinafter, sometimes referred to as "Present formulation").

The composition of the present invention containing Veratridine, Cevadine, a polyoxyethylene sorbitan fatty acid ester surfactant, a hydrophobic solvent, and a glycol-based solvent, and may further contain one or more compounds selected from the group consisting of a sorbitan fatty acid ester and lecithin, and may further contain a propellant gas, can be used in a pest control formulation (hereinafter, sometimes referred to as "Present aerosol formulation").

In this description, the term "Present formulation" includes "Present aerosol formulation." unless otherwise specified.

The Present composition may contain one or more components selected from the following group (a) (hereinafter referred to as "Present components").

Each of the Present components described below is a known component and can be obtained from commercially available formulations or produced by known methods. If the Present component is a microorganism, it can also be obtained from a microorganism depository.

Group (a) consists of acetylcholinesterase inhibitors (for example, carbamate insecticides and organophosphate insecticides), GABA-gated chloride ion channel blockers (for example, phenylpyrazole insecticides), sodium channel modulators (for example, pyrethroid insecticides), nicotinic acetylcholine receptor competitive modulators (for example, neonicotinoid insecticides), nicotinic acetylcholine receptor allosteric modulators, glutamate-gated chloride ion channel allosteric modulators (for example, macrolide insecticides), juvenile hormone mimics, multisite inhibitors, chordotonal organ TRPV channel modulators, mites growth inhibitors, microbial disruptors of insect midgut membranes, mitochondrial ATP synthase inhibitors, uncouplers of oxidative phosphorylation, nicotinic acetylcholine receptor channel blockers (for example, nereistoxin insecticides), chitin synthesis inhibitors, molting disruptors, ecdysone receptor agonists, octopamine receptor agonists, inhibitors of mitochondrial electron transport chain complexes I, II, III, and IV, voltage-dependent sodium channel blockers, acetyl-CoA carboxylase inhibitors, ryanodine receptor modulators (for example, diamide insecticides), chordotonal organ modulators, microbial insecticide, acaricidal active ingredients, and nematicidal active ingredients.

The Present formulation may contain inert carriers and auxiliary agents for formulation. Examples of the inert carriers include solid carriers. If necessary, surfactants and other auxiliary agents for formulation may also be added to the Present composition to prepare the formulation. The Present composition may also be applied onto the surface of an inert carrier to obtain the Present formulation.

Examples of the Present formulation include the following formulations:
aerosol formulations, pump sprays, baits, microcapsules, oil formulations, emulsifiable concentrates, microemulsion formulations, wettable powders, water-dispersible granules, flowables, incense sticks, mat formulations, electric liquid mosquito repellents, fumigants, fumigation agents, fogging agents, poisoned baits, resin formulations, granules, capsules, chewables, syrups, tablets, dustable powders, suppositories, injections (such as intramuscular, subcutaneous, intravenous, and intraperitoneal), spot-on formulations, pour-on formulations, shampoos, lotions, and pastes.

The Present formulation may also be used as mosquito coils, electric mosquito mats, liquid mosquito repellents, fumigants, fumigation agents, sheet formulations, spot-on formulations, and oral formulations. It is preferable that the Present formulation is an aerosol formulation. The Present formulation typically contains 10% to 95% by weight of the Present composition.

Examples of the solid carriers used in formulation include fine powders and granules of clays (such as kaolin clay, diatomaceous earth, bentonite, Fubasami clay, and acid white clay), fumed silica, wet silica, talc, ceramics, other inorganic minerals (such as sericite, quartz, sulfur, activated carbon, and calcium carbonate), chemical fertilizers (such as ammonium sulfate, ammonium phosphate, ammonium nitrate, urea, and ammonium chloride), and synthetic resins (polyethylene, ethylene-vinyl acetate copolymer, ethylene-methyl methacrylate copolymer, ethylene-methacrylic acid copolymer, ethylene-acrylic acid copolymer, polypropylene, polyacrylonitrile, polymethyl methacrylate, polyester resins such as polyethylene terephthalate; nylon resins such as nylon-6, nylon-11, nylon-66; polyamide resins, polyvinyl chloride, polyvinylidene chloride, and vinyl chloride-propylene copolymer).

Examples of the other auxiliary agents for formulation include adhesive agents, dispersants, colorants, and stabilizers. Specific examples include casein, gelatin, saccharides (such as starch, gum arabic, cellulose derivatives, and alginic acid), lignin derivatives, bentonite, synthetic water-soluble polymers (such as polyvinyl alcohol, polyvinylpyrrolidone, and polyacrylic acids), isopropyl acid phosphate, 2,6-di-tert-butyl-4-methylphenol, and BHA (a mixture of 2-tert-butyl-4-methoxyphenol and 3-tert-butyl-4-methoxyphenol).

Examples of the pests controlled by the Present formulation include pest arthropods such as pest insects and pest mites, pest mollusks, and pest nematodes. Examples of the pest arthropods include Hemiptera, Lepidoptera, Thysanoptera, Diptera, Coleoptera, Orthoptera, Hymenoptera, Blattodea, Siphonaptera, Psocodae, Thysanura, Acari, Araneae, Polydesmida, Isopoda, Chilopoda, and Gastropoda. The Present formulation is particularly suitable for controlling Diptera or Blattodea.

The pest arthropods to be controlled may be those that have reduced susceptibility or have developed resistance to commercially available insecticides or acaricides. However, in cases where susceptibility to the agents has significantly decreased or resistance to the agents has significantly developed, it is preferable to use the composition of the present invention in combination with insecticides or acaricides other than those against which the decreased susceptibility or resistance has been observed.

The pest control method of the present invention includes a step of applying the Present formulation directly to pests and/or to their habitats (such as plants, soil, indoors, and animals), or to areas where they are expected to appear. The method may also involve treating seeds. Examples of the pest control method of the present invention include foliar application, soil treatment, root treatment, shower application, fumigation, water surface treatment, and seed treatment.

Examples of the pest control methods by applying an effective amount of the Present formulation to soils include a method of applying an effective amount of the Present formulation to soils before or after planting plants; a method of applying an effective amount of the Present formulation to the rhizosphere of crops to protect them from damage such as feeding by pests; and a method of allowing an effective amount of the Present formulation to be absorbed and translocated from the roots or other plant parts into the plant body, thereby controlling pests that feed on the plant. Specific examples thereof include planting hole treatment (spraying into planting holes, soil mixing after planting hole treatment), plant foot treatment (plant foot spraying, soil mixing after plant foot treatment, irrigation at plant foot, plant foot treatment at a later seeding raising stage), planting furrow treatment (planting furrow spraying, soil mixing after planting furrow treatment), planting row treatment (planting row spraying, soil mixing after planting row treatment, planting row spraying at a growing stage), planting row treatment at the time of sowing (planting row spraying at the time of sowing, soil mixing after planting row treatment at the time of sowing), broadcast treatment (overall soil surface spraying, soil mixing after broadcast treatment), side-article treatment, treatment of water surface (application to water surface, application to water surface after flooding), other soil spraying treatment (spraying of a granular formulation on leaves at a growing stage, spraying under a canopy or around a tree stem, spraying on the soil surface, mixing with surface soil, spraying into seed holes, spraying on the ground surfaces of furrows, spraying between plants), other irrigation treatment (soil irrigation, irrigation at a seedling raising stage, chemical liquid injection treatment, irrigation of a plant part just above the ground, chemical liquid drip irrigation, chemigation), seedling raising box treatment (spraying into a seedling raising box, irrigation of a seedling raising box, flooding into a seedling raising box with chemical liquid), seedling raising tray treatment (spraying on a seedling raising tray, irrigation of a seedling raising tray, flooding into a seedling raising tray with chemical liquid), seedbed treatment (spraying on a seedbed, irrigation of a seedbed, spraying on a lowland rice nursery, immersion of seedlings), seedbed soil incorporation treatment (mixing with seedbed soil, mixing with seedbed soil before sowing, spraying at sowing before covering with soils, spraying at sowing after covering with soils, mixing with covering with soils), and other treatment (mixing with culture soil, plowing under, mixing with surface soil, mixing with soil at the place where raindrops fall from a canopy, treatment at a planting position, spraying of a granule formulation on flower clusters, mixing with a paste fertilizer).

When the Present formulation is used for pest control in the agricultural field, the application rate is usually 1 to 10,000 g per 10,000 m² in terms of the total amount of Veratridine and Cevadine. When treating seeds or vegetative reproduction organs, the total amount of Veratridine and Cevadine applied is usually in the range of 0.001 to 100 g per 1 kg of the seeds or vegetative reproduction organs. If the Present formulation is in the form of an emulsifiable concentrate, wettable powder, or flowable formulation, it is usually diluted with water so that the concentration of the active ingredient is 0.01 to 10,000 ppm to apply. Granules, dustable powders, and the like are generally applied as they are.

These formulations and their aqueous dilutions may be directly applied to pests or to plants such as crops that need to be protected from pests. Alternatively, they may be applied to soil in cultivated fields to control pest arthropods inhabiting the soil.

In addition, it is also possible to carry out treatment by methods such as wrapping a resin formulation processed into sheet or string around crops, stretching it near crops, and laying it on the soil at the base of plants.

When the Present formulation is used for controlling pests inhabiting indoor environments, the application rate of the total amount of Veratridine and Cevadine is usually 0.01 to 1,000 mg per 1 m² of treated surface area when applied on the surface, and 0.01 to 500 mg per 1 m³ of treated space when applied to the space. If the Present formulation is in the form of an emulsifiable concentrate, wettable powder, or flowable formulation, it is usually diluted with water so that the concentration of the active ingredient is 0.1 to 10,000 ppm to apply. Oil formulations, aerosol formulations, fumigants, and poisoned baits are generally applied as they are.

In addition, the Present formulation can be used as a pest control agent in agricultural lands such as fields, paddy fields, turfs, and orchards. Examples of the plants include the following.

Crops: corn, rice, wheat, barley, rye, oats, sorghum, cotton, soybeans, peanuts, buckwheat, sugar beet, rapeseed, sunflower, sugarcane, tobacco, etc.,

Vegetables: Solanaceous vegetables (such as eggplant, tomato, green pepper, chili pepper, and potato), cucurbitaceous vegetables (such as cucumber, pumpkin, zucchini, watermelon, and melon), cruciferous vegetables (such as radish, turnip, horseradish, kohlrabi, Chinese cabbage, cabbage, mustard greens, broccoli, and cauliflower), compositae vegetables (such as burdock, garland chrysanthemum, artichoke, and lettuce), liliaceous vegetables (green onion, onion, garlic, asparagus), umbelliferous vegetables (such as carrot, parsley, celery, and angelica), chenopodiaceous vegetables (such as spinach and Swiss chard), labiatae vegetables (such as perilla, mint, and basil), strawberry, sweet potato, yam, taro, etc., as well as flowers and ornamental plants,

Fruit trees: pome fruits (such as apple, European pear, Japanese pear, quince, and medlar), stone fruits (such as peach, plum, nectarine, Japanese apricot, cherry, apricot, and prune), citrus fruits (such as satsuma mandarin, orange, lemon, lime, and grapefruit), nuts (such as chestnut, walnut, hazelnut, almond, pistachio, cashew nut, and macadamia nut), berries (such as blueberry, cranberry, blackberry, and raspberry), grape, persimmon, olive, loquat, banana, coffee, date palm, and coconut, etc.,

Trees other than fruit trees: tea, mulberry, flowering trees, street trees (ash, birch, dogwood, eucalyptus, ginkgo, lilac, maple, oak, poplar, redbud, sweetgum, plane tree, zelkova, arborvitae, fir, hemlock, juniper, pine, spruce, yew), etc.

The above plants include plants which may be produced by natural breeding, plants which may be generated by mutation, F1 hybrid plants, and genetically modified crops. Examples of the genetically modified crops include plants to which tolerance to herbicides, such as HPPD (4-hydroxyphenylpyruvate dioxygenase enzyme) inhibitors such as isoxaflutole, ALS (acetolactate synthase) inhibitors such as imazethapyr and thifensulfuron-methyl, EPSP (5-enolpyruvylshikimate-3-phosphate synthase) inhibitors, glutamine synthetase inhibitors, PPO (protoporphyrinogen oxidase) inhibitors, bromoxynil or dicamba, has been imparted; plants which become able to synthesize a selective toxin known in the genus Bacillus such as Bacillus thuringiensis or the like; and plants which can synthesize a gene fragment or the like which is partially identical to an endogenous gene derived from a pest insect, and induce a gene silencing (RNAi; RNA interference) in the target pest insect body to impart a specific insecticidal activity.

The above plants are not specifically limited as long as they are generally cultivated cultivars.

### [Examples]

The present invention will be specifically described below by way of examples, but the present invention is not limited in any way by these examples.

A Sabadilla seed extract obtained by the method described in Patent Literature 1, containing 10% by weight of Veratridine and Cevadine and 40% by weight of propylene glycol was weighed together with various materials in the following container in a predetermined amount and mixed by stirring under the following conditions.
Container: Screw tube (volume: 100 mL, material: glass)
Stirring: For 1 minute at room temperature (25°C) by magnetic stirrer
Observation: Immediately after stirring, at room temperature (25°C).
Next, the state of the mixed solution was observed and evaluated based on the Evaluation Criteria below.

### <Evaluation Criteria>

○: A clear solution was observed.
×: Precipitation occurred.

### Compositions

The Composition of the present invention 1, containing Tween (trademark) 85 (polyoxyethylene sorbitan trioleate) alone as a surfactant, was prepared.

The Compositions of the present invention 2 and 3, containing prescribed amounts of Tween (trademark) 85 (polyoxyethylene sorbitan trioleate) and Span (trademark) 20 (sorbitan monolaurate) as surfactants, were prepared.

The Compositions of the present invention 4 and 5, containing prescribed amounts of Tween (trademark) 85 (polyoxyethylene sorbitan trioleate) and Span (trademark) 40 (polyoxyethylene sorbitan monopalmitate) as surfactants, were prepared.

The Compositions of the present invention 6 and 7, containing prescribed amounts of Tween (trademark) 85 (polyoxyethylene sorbitan trioleate) and Span (trademark) 80 (polyoxyethylene sorbitan monooleate) as surfactants, were prepared.

The Compositions of the present invention 8 and 9, containing prescribed amounts of Tween (trademark) 85 (polyoxyethylene sorbitan trioleate) and Span (trademark) 85 (polyoxyethylene sorbitan trioleate) as surfactants, were prepared.

The Compositions of the present invention 10 and 11, containing prescribed amounts of Tween (trademark) 85 (polyoxyethylene sorbitan trioleate) and lecithin as surfactants, were prepared.

The Compositions of the present invention 12 and 13, containing prescribed amounts of Tween (trademark) 60 (polyoxyethylene sorbitan monostearate) and Span (trademark) 20 (sorbitan monolaurate) as surfactants, were prepared.

The Compositions of the present invention 14 and 15, containing prescribed amounts of Tween (trademark) 60 (polyoxyethylene sorbitan monostearate) and Span (trademark) 80 (polyoxyethylene sorbitan monooleate) as surfactants, were prepared.

The Compositions of the present invention 16 to 19, containing prescribed amounts of Tween (trademark) 60 (polyoxyethylene sorbitan monostearate) and Span (trademark) 85 (polyoxyethylene sorbitan trioleate) as surfactants, were prepared.

The Compositions of the present invention 20 and 21, containing prescribed amounts of Tween (trademark) 80 (polyoxyethylene sorbitan monooleate) and Span (trademark) 20 (sorbitan monolaurate) as surfactants, were prepared.

The Compositions of the present invention 22 and 23, containing prescribed amounts of Tween (trademark) 80 (polyoxyethylene sorbitan monooleate) and Span (trademark) 80 (sorbitan monooleate) as surfactants, were prepared.

The Compositions of the present invention 24 and 25, containing prescribed amounts of Tween (trademark) 40 (polyoxyethylene sorbitan monopalmitate) and Span (trademark) 20 (sorbitan monolaurate) as surfactants, were prepared.

The Compositions of the present invention 26 and 27, containing prescribed amounts of Tween (trademark) 40 (polyoxyethylene sorbitan monopalmitate) and Span (trademark) 80 (sorbitan monooleate) as surfactants, were prepared.

The Compositions of the present invention 28 and 29, containing prescribed amounts of Tween (trademark) 20 (polyoxyethylene sorbitan monolaurate) and Span (trademark) 20 (sorbitan monolaurate) as surfactants, were prepared.

The Compositions of the present invention 30 and 31, containing prescribed amounts of Tween (trademark) 20 (polyoxyethylene sorbitan monolaurate) and Span (trademark) 80 (sorbitan monooleate) as surfactants, were prepared.

The compositions and evaluation results of each Composition of the present invention are shown in Tables 1 to 5 below.

**[Table 1]**

| Parts by weight | | Composition of the present invention 1 | Composition of the present invention 2 | Composition of the present invention 3 | Composition of the present invention 4 | Composition of the present invention 5 | Composition of the present invention 6 | Composition of the present invention 7 |
|---|---|---|---|---|---|---|---|---|
| Active ingredient glycol-based solvent | Sabadilla seed extract | 2.50 | 2.50 | 2.50 | 2.50 | 2.50 | 2.50 | 2.50 |
| Glycol-based solvent | Propylene glycol | 2.50 | 2.50 | 2.50 | 2.50 | 2.50 | 2.50 | 2.50 |
| Surfactant | Tween | Tween 85 :20.0 | Tween 85 :19.76 | Tween 85 :19.25 | Tween 85 :19.76 | Tween 85 :18.01 | Tween 85 :19.76 | Tween 85 :19.50 |
| | Span/or Lecithin | - | Span 20 :0.26 | Span 20 :0.75 | Span 40 :0.26 | Span 40 :2.01 | Span 80 :0.25 | Span 80 :0.50 |
| Hydrophobic solvent | Neothiosole | 25.00 | 25.00 | 25.00 | 25.01 | 25.01 | 25.00 | 25.00 |
| Total [parts by weight] | | 50.01 | 50.02 | 50.01 | 50.02 | 50.03 | 50.01 | 50.01 |
| HLB | | | 11.0 | 10.9 | 10.9 | 10.9 | 10.9 | 10.8 |
| Immediately after preparation | | ○ | ○ | ○ | ○ | ○ | ○ | ○ |
| One day later | | ○ | ○ | ○ | ○ | ○ | ○ | ○ |

**[Table 2]**

| Parts by weight | | Composition of the present invention 8 | Composition of the present invention 9 | Composition of the present invention 10 | Composition of the present invention 11 | Composition of the present invention 12 | Composition of the present invention 13 |
|---|---|---|---|---|---|---|---|
| Active ingredient glycol-based solvent | Sabadilla seed extract | 2.50 | 2.50 | 2.50 | 2.50 | 2.50 | 2.50 |
| Glycol-based solvent | Propylene glycol | 2.50 | 2.50 | 2.50 | 2.50 | 2.50 | 2.50 |
| Surfactant | Tween | Tween 85 :19.88 | Tween 85 :16.25 | Tween 85 :17.51 | Tween 85 :10.00 | Tween 60 :12.50 | Tween 60 :6.51 |
| | Span/or Lecithin | Span 85 :0.13 | Span 85 :3.75 | Lecithin :2.51 | Lecithin :10.02 | Span 20 :7.51 | Span 20 : 13.50 |
| Hydrophobic solvent | Neothiosole | 25.01 | 25.00 | 25.00 | 25.00 | 25.00 | 25.00 |
| Total [parts by weight] | | 50.01 | 50.01 | 50.01 | 50.05 | 50.00 | 50.00 |
| HLB | | 10.9 | | 10.9 | 9.5 | | |
| Immediately after preparation | | ○ | ○ | ○ | ○ | ○ | ○ |
| One day later | | ○ | ○ | ○ | ○ | ○ | ○ |

**[Table 3]**

| Parts by weight | | Composition of the present invention 14 | Composition of the present invention 15 | Composition of the present invention 16 | Composition of the present invention 17 | Composition of the present invention 18 | Composition of the present invention 19 |
|---|---|---|---|---|---|---|---|
| Active ingredient glycol-based solvent | Sabadilla seed extract | 2.50 | 2.50 | 2.50 | 2.50 | 5.00 | 5.01 |
| Glycol-based solvent | Propylene glycol | 2.50 | 2.50 | 2.50 | 2.50 | - | - |
| Surfactant | Tween | Tween 60 :16.25 | Tween 60 :12.01 | Tween 60 :15.25 | Tween 60 :13.26 | Tween 60 :13.75 | Tween 60 :8.75 |
| | Span/or Lecithin | Span 80 :3.76 | Span 80 :8.01 | Span 85 : 4.75 | Span 85 :6.75 | Span 85 : 6.27 | Span 85 :11.25 |
| Hydrophobic solvent | Neothiosole | 25.00 | 25.00 | 25.01 | 25.01 | 25.00 | 25.00 |
| Total [parts by weight] | | 50.02 | 50.03 | 50.02 | 50.03 | 50.03 | 50.01 |
| HLB | | | 10.7 | 11.8 | 10.5 | | |
| Immediately after preparation | | ○ | ○ | ○ | ○ | ○ | ○ |
| One day later | | ○ | ○ | ○ | ○ | ○ | ○ |

**[Table 4]**

| Parts by weight | | Composition of the present invention 20 | Composition of the present invention 21 | Composition of the present invention 22 | Composition of the present invention 23 | Composition of the present invention 24 | Composition of the present invention 25 |
|---|---|---|---|---|---|---|---|
| Active ingredient glycol-based solvent | Sabadilla seed extract | 2.50 | 2.50 | 2.50 | 2.50 | 5.00 | 5.01 |
| Glycol-based solvent | Propylene glycol | 2.50 | 2.50 | 2.50 | 2.50 | 2.50 | 2.50 |
| Surfactant | Tween | Tween 80 :10.38 | Tween 80 :5.88 | Tween 80 :14.01 | Tween 80 :11.50 | Tween 40 :10.01 | Tween 40 :6.51 |
| | Span/or Lecithin | Span 20 :9.63 | Span 20 : 14.13 | Span 80 :6.00 | Span 80 :8.50 | Span 20 :10.01 | Span 20 : 13.50 |
| Hydrophobic solvent | Neothiosole | 25.00 | 25.00 | 25.01 | 25.00 | 25.00 | 25.00 |
| Total [parts by weight] | | 50.00 | 50.00 | 50.02 | 50.00 | 50.03 | 50.00 |
| HLB | | | | 11.8 | 10.5 | | |
| Immediately after preparation | | ○ | ○ | ○ | ○ | ○ | ○ |
| One day later | | ○ | ○ | ○ | ○ | ○ | ○ |

**[Table 5]**

| Parts by weight | | Composition of the present invention 26 | Composition of the present invention 27 | Composition of the present invention 28 | Composition of the present invention 29 | Composition of the present invention 30 | Composition of the present invention 31 |
|---|---|---|---|---|---|---|---|
| Active ingredient glycol-based solvent | Sabadilla seed extract | 2.50 | 2.50 | 2.50 | 2.50 | 2.50 | 2.50 |
| Glycol-based solvent | Propylene glycol | 2.50 | 2.50 | 2.50 | 2.50 | 2.50 | 2.50 |
| Surfactant | Tween | Tween 40 :15.00 | Tween 40 :12.75 | Tween 20 :7.52 | Tween 20 :5.02 | Tween 20 :11.75 | Tween 20 :10.88 |
| | Span/or Lecithin | Span 80 :5.00 | Span 80 :7.26 | Span 20 :12.50 | Span 20 :15.01 | Span 80 :8.25 | Span 80 :9.13 |
| Hydrophobic solvent | Neothiosole | 25.00 | 25.00 | 25.02 | 25.00 | 25.01 | 25.00 |
| Total [parts by weight] | | 50.00 | 50.02 | 50.04 | 50.03 | 50.01 | 50.01 |
| HLB | | | 11.5 | 11.6 | 10.6 | | |
| Immediately after preparation | | ○ | ○ | ○ | ○ | ○ | ○ |
| One day later | | ○ | ○ | ○ | ○ | ○ | ○ |

Comparative compositions 1 to 3 were prepared using solvents containing Lutensol as an alcohol alkoxy-based surfactant (Lutensol 05 or Lutensol 08) or Toximul as a castor oil-based surfactant (Toximul 8241), instead of the polyoxyethylene sorbitan fatty acid ester-based surfactant.

The compositions and evaluation results of each Comparative composition are shown in Table 6 below.

**[Table 6]**

| Parts by weight | | Comparative composition 1 | Comparative composition 2 | Comparative composition 3 |
|---|---|---|---|---|
| Active ingredient glycol-based solvent | Sabadilla seed extract | 2.50 | 2.50 | 2.50 |
| Glycol-based solvent | Propylene glycol | 2.50 | 2.50 | 2.50 |
| Surfactant | Lutensol | Lutensol T08:8.01 | Lutensol T05:8.01 | - |
| | Toximul | - | - | Toximul 8241:8.00 |
| Hydrophobic solvent | Neothiosole | 10.01 | 10.00 | 10.01 |
| Total [parts by weight] | | 20.02 | 20.02 | 20.02 |
| HLB | | | | |
| Immediately after preparation | | x | × | × |
| One day later | | × | × | × |

As shown in Tables 1 to 5, clear solutions were obtained in the Compositions of the present invention 1 to 31, which contain a polyoxyethylene sorbitan fatty acid ester-based surfactant as a surfactant. On the other hand, as shown in Table 6, in Comparative compositions 1 to 3 prepared using Lutensol an alcohol alkoxy-based surfactant (Lutensol 05 or Lutensol 08) or Toximul as a castor oil-based surfactant (Toximul 8241), precipitation occurred in the compositions at all tested concentrations of Sabadilla seed extract.

### [Test Example 2] Aerosol Compositions

Compositions containing specified amounts of Tween (trademark) 85 (polyoxyethylene sorbitan trioleate) and Span (trademark) 20 (sorbitan monolaurate), Span (trademark) 40 (polyoxyethylene sorbitan monopalmitate), Span (trademark) 80 (polyoxyethylene sorbitan monooleate), or Span (trademark) 85 (polyoxyethylene sorbitan trioleate) as surfactants were prepared as Aerosol composition of the present invention 1 to 4.

Compositions containing specified amounts of Tween (trademark) 60 (polyoxyethylene sorbitan monostearate) and Span (trademark) 20 (sorbitan monolaurate), or Span (trademark) 80 (polyoxyethylene sorbitan monooleate) as surfactants were prepared as Aerosol composition of the present invention 5 to 6.

A composition containing specified amounts of Tween (trademark) 85 (polyoxyethylene sorbitan trioleate) and lecithin as surfactants were prepared as Aerosol composition of the present invention 7.

A composition containing only Tween (trademark) 85 (polyoxyethylene sorbitan trioleate) as a surfactant were prepared as Aerosol composition of the present invention 8.

Various materials other than the propellant gas LPG were weighed to the specified amounts, and mixed according to the method of Test Example 1 to obtain a mixture. This mixture was placed into a 100 mL aerosol glass bottle, and after attaching an aerosol valve to the bottle, LPG gas was filled. The bottle was then mixed by hand for 30 seconds to obtain an aerosol composition.

The state of the aerosol composition immediately after preparation was observed and evaluated based on the Evaluation Criteria below. The test was conducted at room temperature (25°C).

### <Evaluation Criteria>

⊚: Clear solution
○: Cloudy, but no precipitation occurred
×: Precipitation occurred

The compositions and evaluation results of each Aerosol composition of the present invention are shown in Tables 7 to 8 below.

**[Table 7]**

| Parts by weight | | Aerosol composition of the present invention 1 | Aerosol composition of the present invention 2 | Aerosol composition of the present invention 3 | Aerosol composition of the present invention 4 |
|---|---|---|---|---|---|
| Active ingredient glycol-based solvent | Sabadilla seed extract | 1.80 | 1.80 | 1.80 | 1.80 |
| Surfactant | Tween | Tween 85 :7.02 | Tween 85 :6.79 | Tween 85 :7.11 | Tween 85 :6.70 |
| | Span/or Lecithin | Span 20 :0.18 | Span 40 :0.41 | Span 80 :0.09 | Span 85 :0.50 |
| Hydrophobic solvent | Neothiosole | 9.00 | 9.00 | 9.00 | 9.00 |
| Total (liquid part) [parts by weight] | | 18.00 | 18.00 | 18.00 | 18.00 |
| Propellant gas | LPG 0.47 | 12.36 | 12.68 | 12.28 | 12.67 |
| Total (liquid + gas parts) [parts by weight] | | 30.36 | 30.68 | 30.28 | 30.67 |
| State | | ⊚ | ⊚ | ⊚ | ⊚ |

**[Table 8]**

| Parts by weight | | Aerosol compositi on of the present invention 5 | Aerosol compositi on of the present invention 6 | Aerosol compositi on of the present invention 7 | Aerosol compositi on of the present invention 8 |
|---|---|---|---|---|---|
| Active ingredient glycol-based solvent | Sabadilla seed extract | 1.80 | 1.80 | 1.80 | 1.80 |
| Surfactant | Tween | Tween 60 :3.24 | Tween 60 :4.64 | Tween 85 :4.50 | Tween 85 :7.20 |
| | Span/or Lecithin | Span 20: 3.96 | Span 80: 2.57 | Lecithin: 2.70 | - |
| Hydrophobic solvent | Neothiosole | 9.00 | 9.00 | 9.00 | 9.00 |
| Total (liquid | | 18.00 | 18.00 | 18.00 | 18.00 |
| part) [parts by weight] | | | | | |
| Propellant gas | LPG 0.47 | 12.21 | 12.51 | 12.64 | 13.27 |
| Total (liquid + gas parts) [parts by weight] | | 30.21 | 30.51 | 30.64 | 31.27 |
| State | | ○ | ⊚ | ⊚ | ⊚ |

A composition obtained using Lutensol (Lutensol 05 and Lutensol 08), which are alcohol alkoxy-based surfactants, as the surfactant was prepared as Comparative aerosol composition 1.

The compositions and evaluation results of the Comparative aerosol composition 1 are shown in Table 9 below.

**[Table 9]**

| Parts by weight | | Comparative aerosol composition 1 |
|---|---|---|
| Active ingredient glycol-based solvent | Sabadilla seed extract | 1.80 |
| Surfactant | Lutensol | Lutensol |
| | | T08:3.20 |
| | | Lutensol |
| | | T05:4.01 |
| Hydrophobic solvent | Neothiosole | 9.00 |
| Total (liquid part) [parts by weight] | | 18.00 |
| Propellant gas | LPG 0.47 | 12.64 |
| Total (liquid + | | 30.64 |
| gas parts) [parts by weight] | | |
| State | | × |

As shown in Tables 7 to 8, a clear liquid was obtained in the Aerosol composition of the present invention 1 to 8, which were prepared using polyoxyethylene sorbitan fatty acid ester-based surfactants. On the other hand, as shown in Table 9, in the Comparative aerosol composition 1, which was prepared using a solvent containing Lutensol (Lutensol 05 and Lutensol 08) as alcohol alkoxy-based surfactants instead of polyoxyethylene sorbitan monooleate, sorbitan monooleate, or lecithin as the surfactant, precipitation occurred even at low concentrations of Sabadilla seed extract.

### [Test Example 3]

Ten Blattella germanica were released into a plastic cup, and 0.5 g of each of Aerosol composition of the present invention 1 to 6 and 8, prepared as described above, was sprayed. The number of cockroaches knocked down was counted over time.

The test results are shown in Tables 10 to 11 below.

**[Table 10]**

| Parts by weight | | Aerosol composition of the present invention 1 | Aerosol composition of the present invention 2 | Aerosol composition of the present invention 3 | Aerosol composition of the present invention 4 |
|---|---|---|---|---|---|
| Active ingredient glycol-based solvent | Sabadilla seed extract | 0.90 | 0.90 | 0.90 | 0.90 |
| Surfactant | Tween | Tween 85 :7.02 | Tween 85 :6.79 | Tween 85 :7.11 | Tween 85 :6.70 |
| | Span/or Lecithin | Span 20 :0.18 | Span 40 :0.41 | Span 80 :0.09 | Span 85 :0.50 |
| Hydrophobic solvent | Neothiosole | 9.00 | 9.00 | 9.00 | 9.00 |
| Total (liquid part) [parts by weight] | | 18.00 | 18.00 | 18.00 | 18.00 |
| Propellant gas | LPG 0.47 | 12.36 | 12.68 | 12.28 | 12.67 |
| Total (liquid + gas parts) [parts by weight] | | 30.36 | 30.68 | 30.28 | 30.67 |
| Number of knockdowns (individuals / 10 individuals) | After 0 minutes | 0 | 0 | 0 | 0 |
| | After 3 minutes | 10 | 10 | 10 | 10 |
| | After 6 minutes | 10 | 10 | 10 | 10 |
| | After 9 minutes | 10 | 10 | 10 | 10 |

**[Table 11]**

| Parts by weight | | Aerosol composition of the present invention 5 | Aerosol composition of the present invention 6 | Aerosol composition of the present invention 8 |
|---|---|---|---|---|
| Active ingredient glycol-based solvent | Sabadilla seed extract | 0.90 | 0.90 | 0.90 |
| Surfactant | Tween | Tween 60 :3.24 | Tween 85 :4.64 | Tween 85 :7.20 |
| | Span/or Lecithin | Span 20 :3.96 | Span 80 :2.57 | - |
| Hydrophobic solvent | Neothiosole | 9.00 | 9.00 | 9.00 |
| Total (liquid part) [parts by weight] | | 18.00 | 18.00 | 18.00 |
| Propellant gas | LPG 0.47 | 12.21 | 12.51 | 13.27 |
| Total (liquid + gas parts) [parts by weight] | | 30.21 | 30.51 | 31.27 |
| Number of knockdowns (individuals / 10 individuals) | After 0 minutes | 0 | 0 | 0 |
| | After 3 minutes | 6 | 6 | 10 |
| | After 6 minutes | 10 | 10 | 10 |
| | After 9 minutes | 10 | 10 | 10 |

As shown in Tables 10 to 11, the Aerosol compositions of the present invention prepared using polyoxyethylene sorbitan fatty acid ester-based surfactants exhibited significant knockdown of cockroaches.

### [Industrial applicability]

A composition of the present invention, which contains Veratridine, Cevadine, a polyoxyethylene sorbitan fatty acid ester-based surfactant, a hydrophobic solvent, and a glycol-based solvent is useful for the production of a pest control formulation.

## Claims

1. A composition comprising Veratridine, Cevadine, a polyoxyethylene sorbitan fatty acid ester-based surfactant, a hydrophobic solvent, and a glycol-based solvent.

2. The composition according to claim 1, wherein the ratio of (the total parts by weight of Veratridine and Cevadine) to (the parts by weight of the polyoxyethylene sorbitan fatty acid ester-based surfactant) is 1:1 to 1:1000.

3. The composition according to claim 1 or 2, wherein, when the total parts by weight of the hydrophobic solvent is taken as 1,
the total parts by weight of Veratridine and Cevadine is 0.001 to 1,
the total parts by weight of the polyoxyethylene sorbitan fatty acid ester-based surfactant is 0.1 to 10, and
the total parts by weight of the glycol-based solvent is 0.01 to 1.

4. The composition according to any one of claims 1 to 3, further comprising one or more compounds selected from the group consisting of a sorbitan fatty acid ester and lecithin.

5. The composition according to any one of claims 1 to 4, further comprising a propellant gas.

6. The composition according to any one of claims 1 to 5, the hydrophobic solvent is paraffin.

7. The composition according to any one of claims 1 to 6, wherein the polyoxyethylene sorbitan fatty acid ester-based surfactant is one or more compounds selected from the group consisting of polyoxyethylene sorbitan monolaurate, polyoxyethylene sorbitan monopalmitate, polyoxyethylene sorbitan monostearate, polyoxyethylene sorbitan monooleate, and polyoxyethylene sorbitan trioleate.

8. The composition according to any one of claims 1 to 7, wherein the polyoxyethylene sorbitan fatty acid ester-based surfactant is one or more compounds selected from the group consisting of polyoxyethylene sorbitan trioleate and polyoxyethylene sorbitan monostearate.

9. The composition according to any one of claims 1 to 8, wherein the glycol-based solvent is one or more compounds of a glycol-based solvent having 3 to 6 carbon atoms, selected from the group consisting of propylene glycol, dipropylene glycol, 1,3-butanediol, and 3-methyl-1,3-butanediol.

10. The composition according to claim 9, wherein the glycol-based solvent having 3 to 6 carbon atoms is propylene glycol.

11. The composition according to any one of claims 1 to 10, wherein the sorbitan fatty acid ester is one or more compounds selected from the group consisting of sorbitan monolaurate, sorbitan monopalmitate, sorbitan monostearate, sorbitan monooleate, and sorbitan trioleate.

12. The composition according to any one of claims 1 to 11, wherein Veratridine and Cevadine are contained in a Sabadilla seed extract.

13. The composition according to claim 12, wherein the Sabadilla seed extract is a propylene glycol solution.

14. The composition according to claim 13, wherein the total weight of Veratridine and Cevadine in the propylene glycol solution which is the Sabadilla seed extract is 0.10 to 50% by weight.

15. A pest control formulation comprising the composition according to any one of claims 1 to 14.

16. The pest control formulation according to claim 15, wherein the pest is a pest arthropod.

17. The pest control formulation according to claim 16, wherein the pest arthropod is Diptera or Blattodea.

18. A pest control method comprising a step of applying the pest control formulation according to any one of claims 15 to 17 to a pest, its habitat, or an area where it is expected to appear.

19. The composition according to any one of claim 1 to 14, further comprising one or more components selected from Group (a):
Group (a) consists of acetylcholinesterase inhibitors, GABA-gated chloride ion channel blockers, sodium channel modulators, nicotinic acetylcholine receptor competitive modulators, nicotinic acetylcholine receptor allosteric modulators, glutamate-gated chloride ion channel allosteric modulators, juvenile hormone mimics, multisite inhibitors, chordotonal organ TRPV channel modulators, mites growth inhibitors, microbial disruptors of insect midgut membranes, mitochondrial ATP synthase inhibitors, uncouplers of oxidative phosphorylation, nicotinic acetylcholine receptor channel blockers, chitin synthesis inhibitors, molting inhibitors, ecdysone receptor agonists, octopamine receptor agonists, inhibitors of mitochondrial electron transport chain complexes I, II, III, and IV, voltage-dependent sodium channel blockers, acetyl-CoA carboxylase inhibitors, ryanodine receptor modulators, chordotonal organ modulators, microbial insecticides, acaricidal active ingredients, and nematicidal active ingredients.
